# EUROPEAN PATENT SPECIFICATION

(11) **EP 0 639 303 B1**
(45) Date of publication and mention of the grant of the patent: **24.07.1996**
(21) Application number: 93910169.7
(22) Date of filing: 07.05.1993
(51) Int. Cl.: H02K 15/06

(54) **ELECTRIC MOTOR STATOR END WIRE FORMING**
DAS FORMEN VON STÄNDERWICKELKÖPFEN ELEKTRISCHER MOTOREN
FORMAGE DE FIL D'EXTREMITE DU STATOR D'UN MOTEUR ELECTRIQUE

(30) Priority: 07.05.1992 GB 9209830
(43) Date of publication of application: 22.02.1995
(73) Proprietor: WHITBY TOOL & ENGINEERING COMPANY LIMITED, Hertford, Hertfordshire SG13 7EW (GB)
(72) Inventor: WHITBY, Leslie Rex, Broxbourne, Hertfordshire EN10 7AJ (GB)
(74) Representative: Jackson, Peter Arthur
(86) International application number: GB9300948
(87) International publication number: WO9322818

(56) References cited:
- FR-A- 2 323 263
- GB-A- 1 210 481

## Description

During the production of electric motor stators there is a requirement to compact the annular bundle of windings projecting from the end of the stator body into an envelope of predetermined size so that electrical clearances are maintained when parts are assembled to the end of the stator body. Traditionally the compacting has been carried out by a tool which is juxtaposed at the end of the stator and has radially movable shoes and an axial end ring for compacting the windings. In large volume production of small stators, the use of such tools is quite acceptable. However for larger size stators which are often produced in small numbers, it is generally uneconomical to provide large costly tools corresponding to each stator size, and indeed such large tools are extremely heavy and cumbersome to exchange when changing over from the production of one stator to that of another. Consequently it is not unusual for the windings of large size stators still to be formed and compacted manually, using a mallet. This obviously requires very skilled craftsmen and even then there is inevitable variation in the windings envelope from one stator to another.

In accordance with the present invention, a device for compacting an annular bundle of windings projecting from the end of the body of a stator of an electric motor comprises an assembly of three rollers; a support for the stator, said support consisting of roller means for rotating the assembly and the stator body relatively to one another about the axis of the stator; the first one of the rollers extending, in use, into the bundle and being arranged to roll and compact the radially inner side of the bundle; a second one of the rollers extending, in use, along the outside of the bundle and being arranged to roll and compact the radially outer side of the bundle; and a third one of the rollers extending, in use, across the end of the bundle and being arranged to roll and compact the axial end face of the bundle, the three rollers being adjustable to accommodate stators of different sizes.

Although the first and second rollers may be contoured and the progressive compaction of the bundle in the different directions achieved by moving the assembly of rollers and stator body axially of the stator body towards one another during compaction, means are preferably provided for advancing the first and second rollers radially outwardly and radially inwardly, respectively, of the stator, and the third roller axially of the stator, during the compaction. The means for providing the radial movement of the first and second rollers and/or the axial movement of the third roller may be utilized not only for the progressive compaction of the bundle in the radial direction, but also prior to compaction for the accommodation of stators of different radial and/or axial sizes. The rollers may be advanced by means such as a screw threaded drive but fluid operated rams are preferred. In each case the adjustment of the rollers to accommodate a particular stator size, and the advance of all three rollers to produce progressive compaction of the bundle of windings, may be under numerical or other automatic control. The device can then be changed over from one stator size to another and carry out a compacting operation with the minimum of operator involvement.

In order to improve the compacting operation, two second rollers are preferably provided which are, in use, spaced apart around the outside of the bundle.

The assembly of rollers could be mounted in a rotor which is rotated, possibly even by hand, relatively to a stationary stator body. However this requires clearance for full rotation of all the rollers and in a more compact arrangement the stator body is rotated while contacted by the respective rollers at fixed radial positions. The stator body may be rotated by being placed with its axis horizontal in a cradle formed by a pair or pairs of rollers which both support the stator body and transmit rotation to the stator body.

Although the device so far described with three rollers will form one end of the stator, there may be two opposed heads each with the three rollers, for forming both ends of the stator simultaneously. In that event, and when the stator is arranged to be supported and rotated on a cradle of supporting rollers, the parts of the heads with the three compacting rollers are preferably swivelable away from one another to provide the space necessary for placing a stator on, and removing it from, the cradle. Furthermore, one of the heads may be mounted on a carriage which is movable towards and away from the other head to accommodate stators of different axial length.

An example of a device, constructed in accordance with the present invention, is illustrated somewhat diagrammatically in the accompanying drawings, in which:
Fig. 1 is a front elevation; and,
Fig. 2 is a partial sectional elevation as seen from the line X - X in Fig. 1.

The device has two heads A and B each of which has a base 4A and 4B, respectively. The base 4A is fixed and the base 4B is mounted on wheels 5 whereby the head B can be moved towards and away from the head A by the operation of a ram 6, the separation being measured on a scale 7. Each of the bases 4A, 4B carries a pair of rollers 8, the four rollers together forming a cradle to support a stator body 9. At least one roller of each pair is arranged to be driven by an electric motor 10 via a chain 11. Above the bases 4A, and 4B, each head has an assembly which is pivotally mounted on a fixed column 12 by means of a vertical pivot pin 13, so that it can swing away from the other head and clear from above its own supporting rollers 8, under the action of a ram 14. The assembly carries a pressing roller 15 which can be lowered on a pivoted arm 16 by means of a ram 17, into engagement with the top of the stator body 9, to hold the body down on the cradle of rollers 8, and hence to increase the friction by which rotation is transmitted from the rollers 8 to the stator body.

Each assembly also includes a first lower compacting roller 18, which can be raised and lowered by means of a ram 19, two second upper compacting rollers 20 which can be raised and lowered by means of a ram 21 and a third end compacting roller 22 which can be moved by a ram 23.

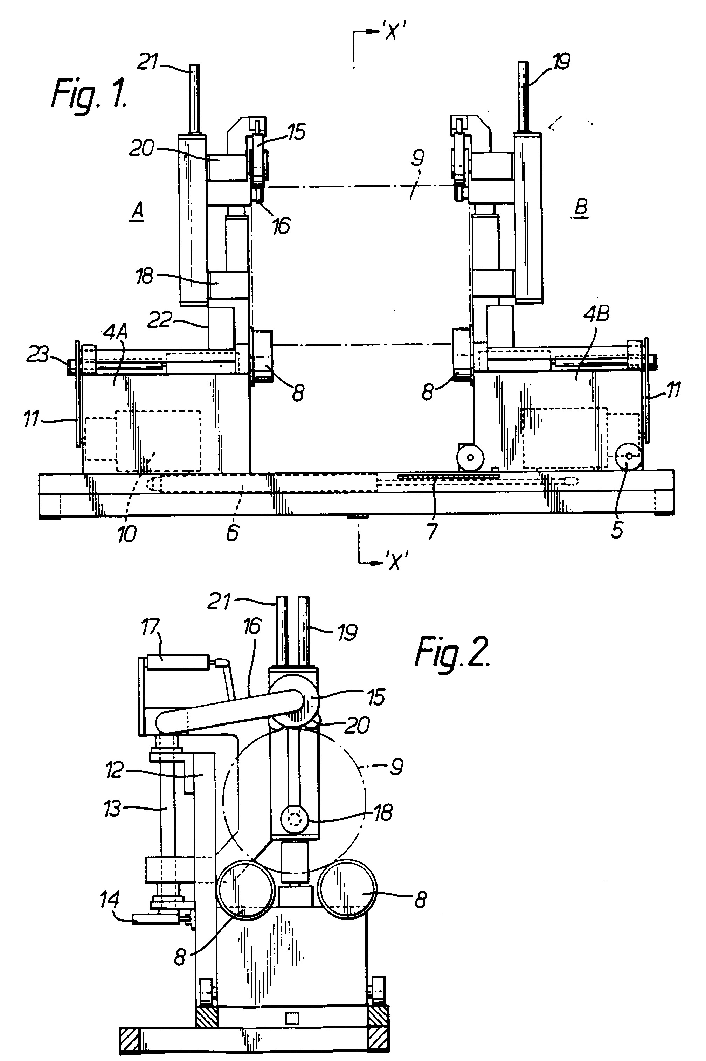

In use the upper assemblies of the heads A and B are unlatched and swung away from one another whereby a stator body 9 with unformed windings can be lowered onto the cradle rollers 8. The upper assemblies of the heads are then swung back to the position illustrated in Fig. 1 and the rams 16 are operated to bring the rollers down into bearing engagement with the top of the stator body. At this time the rams 19 and 21 will have been operated so that the rollers 18 and 20 are disposed respectively adjacent to the radially inner and outer surfaces of the respective ends of the winding bundle, and the roller 22 adjacent to the respective end of the winding bundle. Upon operation of the motors 10, the rollers 8 and stator body are rotated and the rams 19 and 21 are progressively operated so that the rollers 18 and 20 are respectively raised and lowered and come into contact with the radially inner and outer surfaces of the windings at the top of the bundle and progressively compress them to the required envelope. Simultaneously the rollers 22 are advanced by the rams 23 towards one another to compress the respective ends of the winding bundle to the necessary envelope. Upon completion of the forming operation the compacting rollers are retracted slightly, the upper portions of the heads are swung open and the formed stator is lifted off the rollers 8 to be replaced by a new one.

## Claims

1. A device for compacting an annular bundle of windings projecting from the end of the body of a stator (9) of an electric motor, the device comprising an assembly of three rollers (18,20,22); a support for the stator (9), said support consisting of roller means (8) for rotating the assembly and the stator body relatively to one another about the axis of the stator; the first one (18) of the rollers extending, in use, into the bundle and being arranged to roll and compact the radially inner side of the bundle; a second one (20) of the rollers extending, in use, along the outside of the bundle and being arranged to roll and compact the radially outer side of the bundle; and a third one (22) of the rollers extending, in use, across the end of the bundle and being arranged to roll and compact the axial end face of the bundle, the three rollers (18, 20, 22) being adjustable to accommodate stators of different sizes.

2. A device according to claim 1, wherein means (19,21,23) are provided for advancing the first (18) and second (20) rollers radially outwardly and radially inwardly, respectively, of the stator (9), and the third roller (22) axially of the stator, during the compaction.

3. A device according to claim 2, wherein the means for advancing the rollers (18,20,22) are fluid operated rams (19,21,23).

4. A device according to any one of the preceding claims, wherein two second rollers (20) are provided, which are, in use, spaced apart around the outside of the bundle.

5. A device according to any one of the preceding claims, wherein the stator body (9) is rotated by being placed with its axis horizontal in a cradle formed by a pair or pairs of rollers (8) which both support the stator body and transmit rotation to the stator body.

6. A device according to any one of the preceding claims, wherein two opposed heads (A,B) are provided, each with the three rollers (18,20,22), for forming both ends of the stator (9) simultaneously.

7. A device according to claim 6, wherein the parts of the head (A,B) with the three compacting rollers (18,20,22) are swivelable away from one another to provide the space necessary for placing a stator (9) on, and removing it from, the cradle.

8. A device according to claim 7, wherein one of the heads (A,B) is mounted on a carriage (4B) which is movable towards and away from the other head to accommodate stators of different axial length.

## Patentansprüche

1. Vorrichtung zum Verdichten ringfömiger Bündel von Wicklungen, die aus dem einen Ende eines Gehäuses eines Stators (9) eines elektrischen Motors hervorstehen, wobei die Vorrichtung eine Anordnung von drei Walzen (18, 20, 22) und eine Abstützung für den Stator (9), die aus einer Walzenvorrichtung (8) zum Drehen der Anordung und des Statorgehäuses relativ zueinander um die Achse des Stators besteht aufweist;
die erste der Walzen (18) erstreckt sich in der Gebrauchslage in das Bündel hinein und ist angeordnet, um die radial innere Seite des Bündels zu walzen und zu verdichten;
eine zweite der Walzen (20) erstreckt sich in der Gebrauchslage entlang der Außenseite des Bündels und ist angeordnet, um die radial äußere Seite des Bündels zu walzen und zu verdichten; und
eine dritte der Walzen (22) erstreckt sich in der Gebrauchslage über das Ende des Bündels und ist angeordnet, um die axiale Stirnfläche des Bündels zu walzen und zu verdichten,
wobei die drei Walzen (18, 20, 22) einstellbar sind, um Statoren verschiedener Größe aufzunehmen.

2. Vorrichtung nach Anspruch 1, wobei Mittel (19, 21, 23) jeweils zum radial auswärts und radial einwärts Bewegen der ersten (18) und der zweiten (20) Walze bezogen auf den Stator (9) und die dritte Walze (22) während des Verdichtens vorgesehen sind.

3. Vorrichtung nach Anspruch 2, wobei die Mittel zum Bewegen der Walzen (18, 20, 22) fluid betätigte Stempel (19, 21, 23) sind.

4. Vorrichtung nach irgendeinem der vorstehenden Ansprüche, wobei zwei zweite Walzen (20) vorgesehen sind, die in der Gebrauchslage an der Außenseite des Bündels beabstandet angeordnet sind.

5. Vorichtung nach irgendeinem der vorstehenden Ansprüche, wobei das Gehäuse (9) des Stators gedreht wird, dadurch daß dessen horizontale Achse in einer Aufnahme angeordnet ist, die durch ein Paar oder Paare von Walzen (8) gebildet ist, die das Statorgehäuse sowohl tragen als auch die Rotation auf das Statorgehäuse übertragen.

6. Vorrichtung nach irgendeinem der vorstehenden Ansprüche, wobei zwei einander gegenüberliegende Köpfe (A, B) vorgesehen sind, jeder mit den drei Walzen (18, 20, 22), um beide Enden des Stators gleichzeitig zu formen.

7. Vorrichtung nach Anspruch 6, wobei die Teile der Köpfe (A, B) mit den drei verdichtenden Walzen (18, 20, 22) voneinander weg schwenkbar sind, um den zum Plazieren und Entfernen eines Stators (9) aus der Aufnahme erforderlichen Raum zu schaffen.

8. Vorrichtung nach Anspruch 7, wobei einer der Köpfe (A, B) auf einem Schlitten (4B) befestigt ist, der zu dem anderen Kopf hin und davon wegbewegbar ist, um Statoren mit unterschiedlicher axialer Länge aufzunehmen.

## Revendications

1. Dispositif pour compacter un faisceau annulaire d'enroulements débordant de l'extrémité du corps d'un stator (9) d'un moteur électrique, le dispositif comprenant un ensemble de trois rouleaux (18, 20, 22); un support pour le stator (9), ledit support étant constitué d'un moyen à rouleaux (8) pur faire tourner l'ensemble et le corps de stator l'un par rapport à l'autre autour de l'axe du stator; le premier (18) des rouleaux s'étendant en utilisation à l'intérieur du faisceau et étant agencé pour rouler et compacter le côté radialement interne du faisceau; le deuxième (20) des rouleaux s'étendant en utilisation le long du côté externe du faisceau et étant agencé pour rouler et compacter le côté radialement externe du faisceau; et le troisième (22) des rouleaux s'étendant en utilisation à travers l'extrémité du faisceau et étant agencé pour rouler et compacter la face d'extrémité axiale du faisceau, les trois rouleaux (18, 20, 22) étant ajustables de manière à pouvoir loger des stators de différente taille.

2. Dispositif selon la revendication 1, dans lequel des moyens (19, 21, 23) sont prévus pour, pendant le compactage, faire avancer le premier rouleau (18) et le deuxième rouleau (20), respectivement radialement vers l'extérieur et radialement vers l'intérieur du stator (9), et faire avancer le troisième rouleau (22) axialement par rapport au stator.

3. Dispositif selon la revendication 2, dans lequel les moyens pour faire avancer les rouleaux (18, 20, 22) sont des vérins (19, 21, 23) actionnés par fluide.

4. Dispositif selon l'une quelconque des revendications précédentes, dans lequel deux seconds rouleaux (20) sont prévus qui, en utilisation, sont espacés à l'extérieur du faisceau.

5. Dispositif selon l'une quelconque des revendications précédentes, dans lequel le corps de stator (9) est mis en rotation en étant placé avec son axe horizontal dans un berceau formé par une paire ou des paires de rouleaux (8) qui soutiennent tous deux le corps de stator et transmettent une rotation au corps de stator.

6. Dispositif selon l'une quelconque des revendications précédentes, dans lequel sont prévues deux têtes opposées (A,B), chacune comportant les trois rouleaux (18, 20, 22), pour former simultanément les deux extrémités du stator (9).

7. Dispositif selon la revendication 6, dans lequel les parties de la tête (A,B) comportant les trois rouleaux de compactage (18, 20, 22) peuvent être écartées l'une de l'autre par pivotement, pour offrir l'espace nécessaire pour le placement d'un stator (9) sur le berceau et pour son enlèvement hors de ce dernier.

8. Dispositif selon la revendication 7, dans lequel l'une des têtes (A,B) est montée sur un chariot (4B) qui peut être approchée et écartée de l'autre tête pour loger des stators de différente longueur axiale.
